# EUROPEAN PATENT APPLICATION

(11) **EP 1 995 214 A2**
(43) Date of publication of application: **26.11.2008**
(21) Application number: 08155258.0
(22) Date of filing: 28.04.2008
(51) Int. Cl.: C01B 37/02

(54) **Multifunctional periodic mesoporous organosilica materials using block copolymer template and preparation method thereof**

(30) Priority: 23.05.2007 KR 20070050290
(71) Applicant: Sungkyunkwan University Foundation for Corporate Collaboration, Jangan-gu, Suwon-si, Gyeonggi-do (KR)
(72) Inventor: Kim, Duk Joon, 135-968, Seoul (KR); Cho, Eun Bum, 135-855, Seoul (KR)
(74) Representative: Hengelhaupt, Jürgen

(57) **Abstract**

Disclosed are a multifunctional periodic mesoporous organosilica material and a preparation method thereof. More specifically, there is provided a method of preparing a multifunctional periodic mesoporous organosilica material in which two or more organic components form chemical bonds, and are located within a silica wall, the method including the steps of mixing a PEO-PLGA-PEO or a PEO-PPO-PEO block copolymer with distilled water, alcohol and acid to thereby prepare an aqueous solution (step 1); mixing two or more kinds of organosilica precursors into the aqueous solution and subjecting the organosilica precursors to a reaction (step 2); subjecting a product obtained in step 2 to a hydrothermal reaction (step 3); and washing and filtering a product obtained in step 3 to thereby remove the block copolymer, and drying a final product (step 4). In this way, the multifunctional periodic mesoporous organosilica material contains two or more organic components forming chemical bonds and located within the silica wall, has a surface area of 300~1,500m²/g, and includes an ordered hexagonal array of pores with a size of 5 to 10nm. Also, the mesoporous organosilica material can be prepared in the form of a spherical particle with micrometer-sized average diameter or a rod according to its uses.

## Description

### BACKGROUND OF THE INVENTION

### 1. Field of the invention

The present invention relates to a multifunctional periodic mesoporous organosilica material and a preparation method thereof, and more particularly to a novel method of preparing a mesoporous organosilica material, which has a high surface area and an ordered array of pores with a certain size, by using a block copolymer template, and multifunctional periodic organosilica materials prepared by such a method.

### 2. Description of the Prior Art

A lot of research has been done to analyze the pore structure of a mesoporous material with a pore size range of 2 to 50nm, seek a new pore structure, extend pores, introduce new organo-functional groups and metal oxides into the silica wall, and so forth since Mobil Co. reported M41S mesoporous molecular sieves in 1992. In particular, continuous attempts have been made to supplement surface reactivity with other materials, optical characteristics, smooth intercalation of external substances, selective separation, and other functions by thickening the wall with uniform composition of functionalized silica or providing the wall with desired physical and chemical properties.

The development of such a mesoporous molecular sieve material has extended a pore size range to about 2 to 50nm, as compared to existing materials with fine pores, such as zeolite and so forth, and thus has opened the possibility to solve problems with the reaction, adsorption, separation, and culture of relatively large materials, such as polymer materials (nanosized molecules), biological materials (e.g., proteins, cells, etc.), or the like, which have hampered the application of the molecular sieve material in the meantime.

In particular, it is possible to modify the mechanical strength of such a mesoporous molecular sieve material by introducing various organic components, and the mesoporous molecular sieve material may also be applicable as an electrolyte and other conducting materials with selectivity by introducing various organic components to thereby form the mesoporous molecular sieve material into a membrane.

There have been proposed several methods for introducing a functional group other than silica into the mesoporous molecular sieve material, including a grafting method in which a functional group is chemically grafted onto a mesoporous silica material after the preparation of the mesoporous silica material, a co-condensation method in which a functional group precursor and a silica precursor react together at the same time, and the like. However, in all of these methods, a non-uniform distribution appears within the mesoporous silica framework wall or there is a limitation on introducing the functional group in a content sufficient to effectively provide physical properties.

A periodic mesoporous organosilica material was first reported in 1999, and it was confirmed from this report that a mesoporous organosilica material with an ordered structure can be effectively prepared using an organosiloxane precursor in which an organic substance is connected between silica and silica in a bridge structure and using an existing or modified cationic surfactant or a block copolymer [T. Asefa, M. J. MacLachlan, N. Coombs, G. A. Ozin, Nature, Vol.402, P.867, 1999*].*

The periodic mesoporous organosilica material has an advantage in that a desired organic substance can be introduced in large amount, and a distribution of the organic substance can be uniformly and periodically arranged. Also, it has another advantage in that additional functional groups can be further attached by utilizing the existing grafting or co-condensation method together.

A paper by S. Inagaki et al. discloses a method of preparing a mesoporous material, in which phenylene is chemically combined with silica to form the mesoporous material [S. Inagaki, S. Guan, T. Ohsuna, T. Terasaki, Nature, Vol.416, p.304, 2002]. Such a preparation method uses an octadecyltrimethylammonium chloride (ODTMA) surfactant containing cationic amine for preparing a mesoporous material by chemically combining phenylene group with silica. The preparation of such a periodic mesoporous phenylene-silica material is expected to not only further extend selectivity for use as a adsorbent and a catalyst, but also provide applicability as electrolyte membrane or acid catalyst when a sulfonic acid group is added onto the silica wall surface.

In order to add selectivity for another use to a mesoporous material and additionally use the mesoporous material for preparing an electrolyte membrane and other composites, the mesoporous material must be effectively blended with other materials, such as organic polymers, and have stable physical properties. This requires a new aspect of mesoporous material preparation, and thus there is an urgent need for further modifying the conventional mesoporous materials in order to adjust their outer shape and stabilize their physical properties.

This need for modifying the existing materials results in research on a multifunctional periodic mesoporous organosilica material in which two or more components are contained so as to further provide selectivity to materials and other characteristics. In view of practical application fields of a material, there may be a case where a target physical property of the material cannot be satisfied by a single organic component. For example, when it is necessary to adjust various properties of a material, including mechanical properties, physical properties related to the durability, such as thermal and hydrothermal stabilities, and chemical/physical surface properties, such as hydrophilicity/hydrophobicity related to selective adsorptivity for external materials and positive/negative chargeabilty, and when a composite is prepared by mixing a material with other organic and inorganic materials, satisfactory physical properties and interfaces may not be obtained by a single organic component. Although a specific example thereof has not been reported yet, it is thought that the research on the multifunctional periodic mesoporous organosilica material containing two or more organic components is of great significance in that a basic material for use in new applications is prepared. Therefore, it is necessary to form a combination of two kinds or three or more kinds of organic components that have a rigid cyclic structure with conjugated bonds, a flexible linear chain structure, and a cyclic structure with unshared electron pairs, and the preparation of a material having a covalent bond with silica is expected to become effective when it is feasible to use the material for the above-mentioned several applications in the future. It can be said that the significance of the research on the multifunctional periodic mesoporous organosilica material containing two or more organic components resides in preparing a basic material for coping with such new requirements.

A paper by M. C. Burleigh et al. [Chem. Mater., M. C. Burleigh et al., Vol. 16, p.3, 2004] discloses the preparation of a multifunctional periodic mesoporous organosilica (multifunctional PMO) material. In this paper, a hexagonal mesoporous material with a pore size of 3.5 to 4.0nm is prepared using the surfactant Brij76 (C₁₈H₃₇(OCH₂OCH₂)₁₀OH) as a structure-directing agent and using silsesquioxanes with a phenylene bridging group and an ethane bridging group, respectively, as an organosilica precursor.

Also, a paper by J. Morell et al. [J. Mater. Chem., J. Morell et al., Vol.16, p.2809, 2006] discloses the preparation of a multifunctional PMO material, in which a hexagonal mesoporous material with a pore size of 4.8 to 5.4nm is prepared using the surfactant Brij76 and the block copolymer P123 (EO₂₀PO₇₀EO₂₀) as a structure-directing agent and using silsesquioxanes with a phenylene bridging group and an thiophene bridging group, respectively, as an organosilica precursor.

In the papers published so far, since relatively small-sized (3 to 5nm) mesopores are obtained using a nonionic surfactant and a block copolymer as a pore-generator, and the resultant multifunctional PMO material contains only two components and has a rod-like outer shape, there is a limitation on extending its practical applicability.

### SUMMARY OF THE INVENTION

Thereupon, the present inventors have studied again and again a solution to the above-mentioned problems occurring in the prior art, and completed the present invention by discovering that multifunctional PMO materials that have a high surface area and an ordered array of pores with a certain size, and contain two or more component organic substances can be prepared using a PEO-PLGA-PEO or a PEO-PPO-PEO triblock copolymer as a structure-directing agent.

Accordingly, an object of the present invention is to provide a method of preparing multifunctional PMO materials that contain two or three kinds of organic substances, such as phenylene, thiophene and ethane groups, etc., uniformly distributed in the silica wall via chemical bonds, can be prepared in the form of a micrometer-sized spherical particle with a wide range of applications, and has a high surface area and an ordered array of pores with a certain size of 5 to 10nm.

Another object of the present invention is to provide multifunctional PMO materials prepared by the above method.

In order to accomplish these objects, in accordance with an aspect of the present invention, there is provided a method of preparing a multifunctional PMO material containing two or three components selected from the group consisting of phenylene, thiophene and ethane groups by using a PEO-PLGA-PEO or a PEO-PPO-PEO block copolymer as a structure-directing agent.

In accordance with another aspect of the present invention, there are provided multifunctional PMO materials containing two or three components selected form the group consisting of phenylene, thiophene and ethane groups, which is prepared by the above method.

Reference will now be made in detail to the present invention.

In a first aspect, the present invention provides a method of preparing a multifunctional PMO material containing two or three components selected from the group consisting of phenylene, thiophene and ethane groups.

More specifically, the present invention provides a method of preparing multifunctional PMO materials in which two or more organic components form chemical bonds, and are located within a silica wall, the method including the steps of:
mixing a PEO-PLGA-PEO or a PEO-PPO-PEO block copolymer with distilled water, alcohol and acid to thereby prepare an aqueous solution (step 1);
mixing two or more kinds of organosilica precursors into the aqueous solution and subjecting the organosilica precursors to a reaction (step 2);
subjecting a product obtained in step 2 to a hydrothermal reaction (step 3); and
filtering and washing a product obtained in step 3 to thereby remove the block copolymer, and drying a final product (step 4) .

In step 1, an aqueous solution containing a PEO-PLGA-PEO or a PEO-PPO-PEO block copolymer is prepared.

The PEO-PLGA-PEO or PEO-PPO-PEO block copolymer is a material for use as a structure-directing agent.

PEO-PLGA-PEO block copolymers have been used for biological drug release or as a drug carrier because they show special temperature-dependent sol-gel phase transition behaviors in an aqueous solution, and all kinds of PEO-PLGA-PEO block copolymers well known in the art may be used in the present invention. Preferably, a PEO-PLGA-PEO block copolymer that has a number-average molecular weight of 3,500 to 7,000 Dalton and includes the PEO (polyethylene oxide) block in an amount of 0.33 to 0.40% by weight, based on the total weight of the block copolymer, may be used.

Also, a PEO-PPO-PEO block copolymer that has a number-average molecular weight of 3,000 to 15,000 Dalton and includes PEO in an amount of 0.27 to 0.35% by weight, based on the total weight of the block copolymer, may be used in the present invention. Preferably, an EO₂₀PO₇₀EO₂₀ (where, EO is ethylene oxide, PO is propylene oxide, and subscripts represent the number of ethylene oxide units or propylene oxide units) block copolymer including PEO in an amount of 0.3% by weight, based on the total weight of the block copolymer (Commercial Name: P123, Manufacturer: BASF), may be used.

In this step, acid is used as a solvent for dissolving the block copolymer; and for controlling supramolecular interactions and sol-gel kinetics among block copolymer micelle and organo-bridged silsesquioxanes. Examples of acid that may be used in the present invention include strong acids, such as hydrochloric acid, sulfuric acid, nitric acid, bromic acid and the like, and preferably include commercialized 37 wt% hydrochloric acid.

Also, in the present invention, alcohol is used as another solvent for dissolving the block copolymer. Alcohol is an essential component for achieving a higher surface area in the case of using the PEO-PLGA-PEO block copolymer, but may be selectively used in the case of using the PEO-PPO-PEO block copolymer. Examples of alcohol that may be used in the present invention include C₁₋₄ linear or branched-chain alcohols, and preferably include ethanol.

In this step, the PEO-PLGA-PEO or PEO-PPO-PEO block copolymer is thoroughly dissolved in acid, alcohol and water to thereby form an aqueous solution. With regard to this, in the case of using the PEO-PLGA-PEO block copolymer, the aqueous solution may include 2 to 2.5% by weight of PEO-PLGA-PEO block copolymer, 0.3 to 7.4% by weight of acid, 0 to 6.7% by weight of alcohol, and the balance water. Also, in the case of using the PEO-PPO-PEO block copolymer, the aqueous solution may include 2.5 to 2.7% by weight of PEO-PPO-PEO block copolymer, 0.3 to 0.7% by weight of acid, and the balance water.

In step 2, two or more kinds of organosilica precursors are mixed into the aqueous solution.

The organosilica precursors of the present invention are precursors capable of providing an organosilica material, such as phenylene-ethane-silica, thiophene-ethane-silica, phenylene-thiophene-silica, phenylene-thiophene-ethane-silica, and the like, and are selected from materials represented by the following Formula 1:

[Formula 1] (RO)₃Si-M-Si(OR)₃

In Formula 1, R is a C₁₋₅ alkyl group; O is oxygen; and M is a C₁₋₈ alkylene group, C₄ thiophene group, C₅₋₂₀ alkylthiophene group, C₅ phenylene group, C₆₋₂₁ alkylphenylene group, C₁₀₋₄₀ arylphenylene group, C₅₋₄₀ arylene group, C₅₋₄₀ alkylarylene group, or C₅₋₄₀ arylalkylene group.

Preferred organosilica precursors that may be used in the present invention are selected from the group consisting of 1,2-bis(trimethoxysilyl)methane, 1,2-bis(triethoxysilyl)methane, 1,2-bis(trimethoxysilyl)ethane, 1,2-bis(triethoxysilyl)ethane, 1,4-bis(trimethoxysilyl)benzene, 1,4-bis(trimethoxysilylethyl)benzene, 1,4-bis(triethoxysilyl)benzene, 1,4-bis(triethoxysilylethyl)benzene, 2,5-bis(trimethoxysilyl)thiophene, 2,5-bis(triethoxysilyl)thiophene, 4,4'-bis(trimethoxysilyl)biphenyl, and 4,4'-bis(triethoxysilyl)biphenyl.

In particular, the present invention is characterized in that two or more organic components form chemical bonds, as described above. Thus, from among the above-mentioned organosilica precursors, two or more organosilica precursors that are different in M are used. More preferably, phenylene-silica/ethane-silica precursors; thiophene-silica/ethane-silica precursors; phenylenesilica/thiophene-silica precursors; or phenylene-silica, thiophene-silica, and ethane-silica precursors may be selected.

The total mole number of the two or more kinds of organosilica precursors selected in this step is determined such that 15 to 100 moles of organosilica precursors are mixed into the aqueous solution prepared in step 1 with respect to 1 mole of block copolymer. Also, if the total mole number of the two or more kinds of organosilica precursors is kept constant, the organosilica precursors may be mixed in the same molar ratio or any different molar ratios (e.g., 3:1, 2:1, 1:2, 1:3, 1:1:2, 1:1:3, 1:2:3, etc.). Here, the total mole number of the organosilica precursors mixed into the aqueous solution is related with values corresponding to the range from 1.3 to 2 times of the weight of a PEO block in the PEO-PLGA-PEO or PEO-PPO-PEO block copolymer used as a structure-directing agent. When the total mole number of the organosilica precursors mixed into the aqueous solution is out of the range, a mesoporous organosilica material with an ordered structure cannot be prepared, and advantages according to the fact that one or more organosilica precursors are additionally added as compared to conventional PMO materials cannot be obtained.

After the organosilica precursors are mixed into the aqueous solution, they may be subjected to a reaction by intensively stirring the mixture solution at a temperature of 30 to 50°**C** for 0.5 to 2 hours. The stirring may be carried out by any stirring apparatus well known in the art, for example, a magnetic stirrer.

In this way, a white precipitate can be obtained.

In step 3, the resultant product obtained from step 2 is subjected to a hydrothermal reaction. Through this step, more condensed multifunctional periodic mesoporous organosilica materials can be formed.

In this step, the hydrothermal reaction may be carried out in such a manner that the aqueous solution including the white precipitate derived from step 2 is settled at a temperature of 80 to 100°**C** for 20 to 24 hours, and the precipitate can be obtained as a product through the hydrothermal reaction.

In step 4, the product obtained in step 3 is washed, filtered, and dried to thereby obtain a final product.

The precipitate obtained in this way include the block copolymer, which can be removed by the successive washing and filtering process. The washing process may be carried out using an organic solvent, such as alcohol, acetone, and the like. As an example, the precipitate may be washed with ethanol and acetone. More specifically, the precipitate is left in 100 to 120ml of ethanol per g of precipitate for 2 hours, ethanol is separated, and then stirring is conducted using 100 to 120ml of acetone at a temperature of 60°**C** for 5 to 10 hours. Subsequently, the filtration process may be conducted. The filtration process may be carried out by any filtration apparatus well known in the art, for example, a suction flask and a filter. Also, in the filtration process, distilled water and acetone may each flow down in sequence in an amount of 50 to 100ml.

Thereafter, a drying process is conducted to thereby obtain a final product, that is, a multifunctional periodic mesoporous organosilica material.

In a second aspect, the present invention provides a multifunctional periodic mesoporous organosilica material prepared by the above method.

The multifunctional periodic mesoporous organosilica material of the present invention includes a phenylene-ethane-silica material, a thiophene-ethane-silica material, a phenylene-thiophene-silica material, and a phenylene-thiophene-ethane-silica material, characterized by two or more organic components that form chemical bonds and are located within the silica wall, a surface area of 300~1,500m²/g, and an ordered hexagonal array of pores with a size of 5 to 10nm.

Such a material is in the form of a spherical particle with an average diameter of 0.5 to 10**µm** or a rod.

### BRIEF DESCRIPTION OF THE DRAWINGS

The above and other objects, features and advantages of the present invention will be more apparent from the following detailed description taken in conjunction with the accompanying drawings, in which:

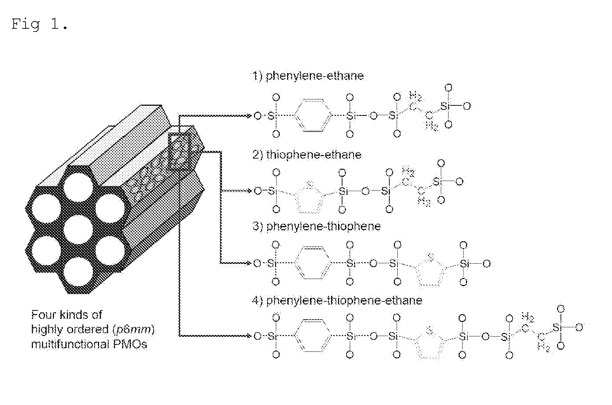

FIG. 1 is a view schematically illustrating the types of multifunctional periodic mesoporous organosilica materials prepared according to preferred embodiments of the present invention;

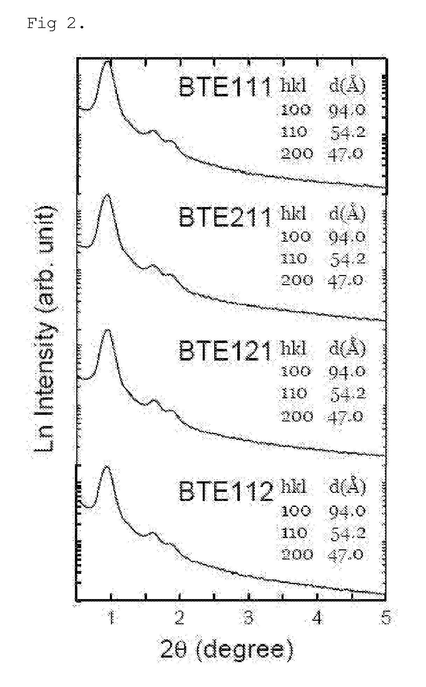

Fig. 2 is a graph illustrating a small angle X-ray scattering spectrum of a mesoporous phenylene-thiophene-ethane-silica material prepared according to a preferred embodiment of the present invention;

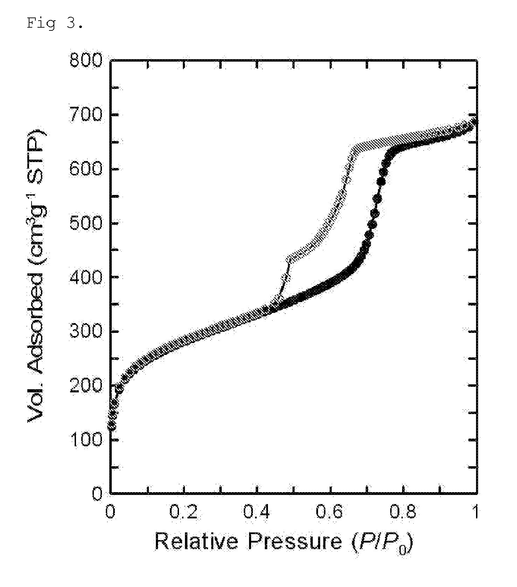

FIG. 3 is a graph illustrating a nitrogen adsorption-desorption isotherm of a mesoporous phenylene-thiophene-ethane-silica material prepared according to a preferred embodiment of the present invention;

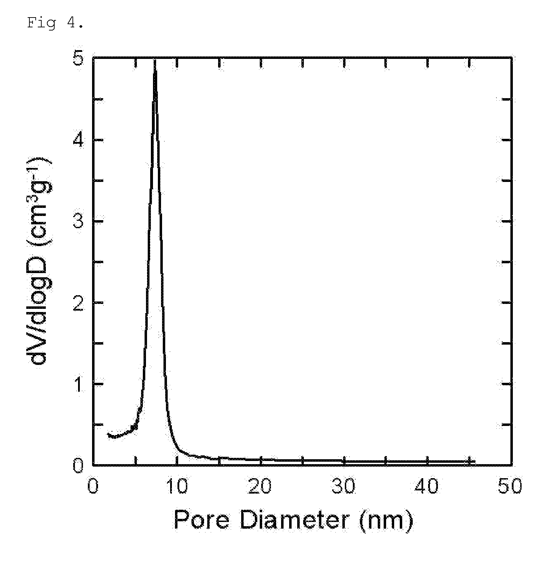

FIG. 4 is a graph illustrating a pore size distribution curve derived from the nitrogen adsorption isotherm of FIG. 3 by using the BJH (Barret-Joyner-Halenda) method;
FIG. 5 is a graph illustrating a solid-phase silicon nuclear magnetic resonance spectrometry spectrum of a mesoporous phenylene-thiophene-ethane-silica material prepared according to a preferred embodiment of the present invention;

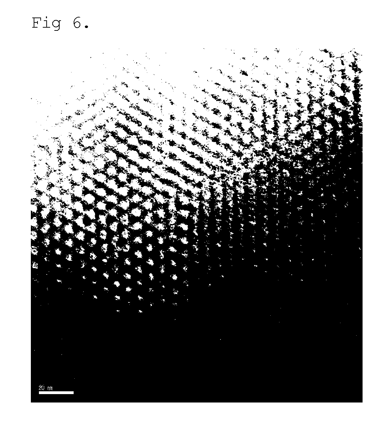

FIG. 6 is a transmission electron microscope (TEM) picture of a mesoporous phenylene-thiophene-ethane-silica material prepared according to a preferred embodiment of the present invention;

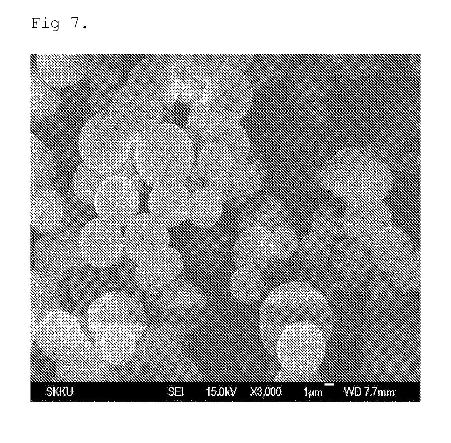

FIG. 7 is a scanning electron microscope (SEM) picture of a mesoporous phenylene-thiophene-ethane-silica material prepared according to a preferred embodiment of the present invention; and

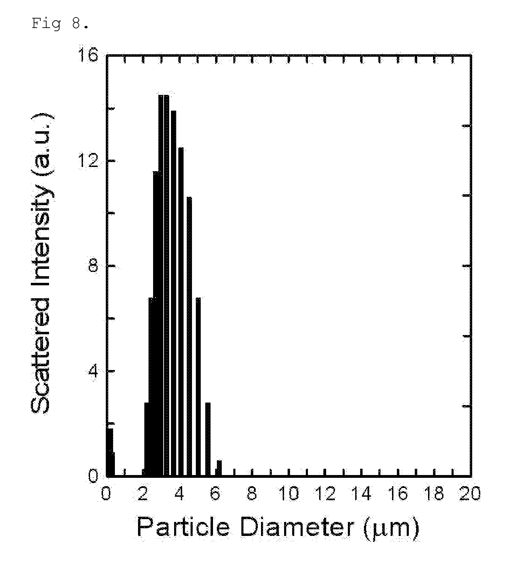

FIG. 8 is a particle size distribution diagram of a mesoporous phenylene-thiophene-ethane-silica material prepared according to a preferred embodiment of the present invention, obtained by an electrophoresis light scattering apparatus.

### DETAILED DESCRIPTION OF THE PREFERRED EMBODIMENTS

Hereinafter, preferred embodiments of the present invention will be described with reference to the accompanying drawings. However, the following examples are illustrative merely, and the scope of the present invention should not be construed as being limited thereto.

### Examples 1 to 4: Preparation of the Inventive Multifunctional Periodic Mesoporous Organosilica Materials by Using PEO-PLGA-PEO Block Copolymer

Sample names of multifunctional periodic mesoporous organosilica materials to be prepared through Examples 1 to 4 and molar content ratios of organosilica precursors added as reactants to each sample are shown in Table 1.

**Table 1**

| | sample name | molar ratio of organosilica precursor | | |
|---|---|---|---|---|
| | | BTEB^{a}) | BTET^{b}) | BTEE^{C}) |
| Example 1 | BE31 | 3 | 0 | 1 |
| | BE11 | 1 | 0 | 1 |
| | BE13 | 1 | 0 | 3 |
| Example 2 | TE31 | 0 | 3 | 1 |
| | TE11 | 0 | 1 | 1 |
| | TE13 | 0 | 1 | 3 |
| Example 3 | BT31 | 3 | 1 | 0 |
| | BT11 | 1 | 1 | 0 |
| | BT13 | 1 | 3 | 0 |
| Example 4 | BTE111 | 1 | 1 | 1 |
| | BTE211 | 2 | 1 | 1 |
| | BTE121 | 1 | 2 | 1 |
| | BTE112 | 1 | 1 | 1 |

| | | | | |
|---|---|---|---|---|
| a) BTEB: 1,4-bis(triethoxysilyl)benzene b) BTET: 2,5-bis(triethoxysilyl)thiophene c) BTEE: 1,2-bis(triethoxysilyl)ethane | | | | |

### Example 1: Preparation of Mesoporous Phenylene-Ethane-Silica Material by Using PEO-PLGA-PEO Block Copolymer

0.5g of EO₁₆(L₂₉G₇) EO₁₆ or EO₁₆(L₂₃G₆) EO₁₆ triblock copolymer from among PEO-PLGA-PEO block copolymers was mixed with 21.85g of distilled water, 0.5g of ethanol, and 0.15g of 37wt% hydrochloric acid to thereby prepare an aqueous solution.

0.35g of 1,4-bis(triethoxysilyl)benzene (BTEB) and 0.52g of 1,2-bis(triethoxysilyl)ethane (BTEE) were added into the aqueous solution, and the mixture solution was magnetically stirred at a temperature of 40°C for 1 hour (sample name: BE11). Meanwhile, 0.56g of 1,4-bis(triethoxysilyl)benzene (BTEB) and 0.26g of 1,2-bis(triethoxysilyl)ethane (BTEE) were added in the case of sample BE31 in Table 1, and 0.19g of 1,4-bis(triethoxysilyl)benzene (BTEB) and 0.78g of 1,2-bis(triethoxysilyl)ethane (BTEE) were added in the case of sample BE13 in Table 1.

A white precipitate obtained following the reaction was subjected to a settlement reaction in a 100°C water bath for 24 hours.

The resultant precipitate obtained through the settlement reaction was stirred at a temperature of 60°C in ethanol and acetone to thereby wash the precipitate, the washed precipitate was filtered using a suction flask to thereby remove the block copolymer, and then the filtered precipitate was dried to thereby obtain a mesoporous phenylene-ethane-silica material in the form of a spherical particle.

As a result of a small angle X-ray scattering experiment for the obtained mesoporous phenylene-ethane-silica material, the mesoporous phenylene-ethane-silica material showed a two-dimensional hexagonal cylinder structure in which *d*-spacing is 94.0~96.1Å , and each of (100), (110) and (200) peaks exists at a crystal lattice position.

A nitrogen adsorption-desorption isotherm was obtained for the prepared mesoporous phenylene-ethane-silica material, and a BET surface area of 1,031~1,038m²/g, a BJH (Barett-Joyner-Halenda) pore volume of 1.08~1.14cm³/g, and a pore size of 7.3~7.5nm were derived from the obtained adsorption isotherm.

The average particle size of the spherical particle evaluated by a scanning electron microscope (SEM) and an electrophoresis light scattering apparatus showed a value of 2.1~3.0µm.

### Example 2: Preparation of Mesoporous Thiophene-Ethane-Silica Material by Using PEO-PLGA-PEO Block Copolymer

0.5g of EO₁₆(L₂₉G₇) EO₁₆ or EO₁₆(L₂₃G₆) EO₁₆ triblock copolymer from among PEO-PLGA-PEO block copolymers was mixed with 21.85g of distilled water, 0.5g of ethanol, and 0.15g of 37wt% hydrochloric acid to thereby prepare an aqueous solution.

0.37g of 2,5-bis(triethoxysilyl)thiophene (BTET) and 0.52g of 1,2-bis(triethoxysilyl)ethane (BTEE) were added into the aqueous solution, and the mixture solution was magnetically stirred at a temperature of 40°C for 1 hour (sample name: TE11). Meanwhile, 0.55g of 2,5-bis(triethoxysilyl)thiophene (BTET) and 0.26g of 1,2-bis(triethoxysilyl)ethane (BTEE) were added in the case of sample TE31 in Table 1, and 0.19g of 2,5-bis(triethoxysilyl)thiophene (BTET) and 0.78g of 1,2-bis(triethoxysilyl)ethane (BTEE) were added in the case of sample TE13 in Table 1.

A white precipitate obtained following the reaction was subjected to a settlement reaction in a 100°C water bath for 24 hours.

The resultant precipitate obtained through the settlement reaction was stirred at a temperature of 60°C in ethanol and acetone to thereby wash the precipitate, the washed precipitate was filtered using a suction flask to thereby remove the block copolymer, and then the filtered precipitate was dried to thereby obtain a mesoporous thiophene-ethane-silica material in the form of a spherical particle.

As a result of a small angle X-ray scattering experiment for the obtained mesoporous thiophene-ethane-silica material, the mesoporous thiophene-ethane-silica material showed a two-dimensional hexagonal cylinder structure in which *d*-spacing is 93.0~94.0Å , and each of (100), (110) and (200) peaks exists at a crystal lattice position.

A nitrogen adsorption-desorption isotherm was obtained for the prepared mesoporous thiophene-ethane-silica material, and a BET surface area of 893~998m²/g, a BJH (Barett-Joyner-Halenda) pore volume of 1.05~1.19cm³/g, and a pore size of 6.3~7.1nm were derived from the obtained adsorption isotherm.

The average particle size of the spherical particle evaluated by a scanning electron microscope (SEM) and an electrophoresis light scattering apparatus showed a value of 0.51~0.57µm.

### Example 3: Preparation of Mesoporous Phenylene-Thiophene-Silica Material by Using PEO-PLGA-PEO Block Copolymer

0.5g of EO₁₆(L₂₉G₇) EO₁₆ or EO₁₆(L₂₃G₆) EO₁₆ triblock copolymer from among PEO-PLGA-PEO block copolymers was mixed with 21.85g of distilled water, 0.5g of ethanol, and 0.15g of 37wt% hydrochloric acid to thereby prepare an aqueous solution.

0.38g of 1,4-bis(triethoxysilyl)benzene (BTEB) and 0.37g of 2,5-bis(triethoxysilyl)thiophene (BTET) were added into the aqueous solution, and the mixture solution was magnetically stirred at a temperature of 40°C for 1 hour (sample name: BT11). Meanwhile, 0.56g of 1,4-bis(triethoxysilyl)benzene (BTEB) and 0.18g of 2,5-bis(triethoxysilyl)thiophene (BTET) were added in the case of sample BT31 in Table 1, and 0.19g of 1,4-bis(triethoxysilyl)benzene (BTEB) and 0.56g of 2,5-bis(triethoxysilyl)thiophene (BTET) were added in the case of sample BT13 in Table 1.

A white precipitate obtained following the reaction was subjected to a settlement reaction in a 100°C water bath for 24 hours.

The resultant precipitate obtained through the settlement reaction was stirred at a temperature of 60°C in ethanol and acetone to thereby wash the precipitate, the washed precipitate was filtered using a suction flask to thereby remove the block copolymer, and then the filtered precipitate was dried to thereby obtain a mesoporous phenylene-thiophene-silica material in the form of a spherical particle.

As a result of a small angle X-ray scattering experiment for the obtained mesoporous phenylene-thiophene-silica material, the mesoporous phenylene-thiophene-silica material showed a two-dimensional hexagonal cylinder structure in which *d*-spacing is 94.0~95.0**Å**, and each of (100), (110) and (200) peaks exists at a crystal lattice position.

A nitrogen adsorption-desorption isotherm was obtained for the prepared mesoporous phenylene-thiophene-silica material, and a BET surface area of 887~1,017m²/g, a BJH (Barett-Joyner-Halenda) pore volume of 0.87~1.06cm³/g, and a pore size of 6.8~7.5nm were derived from the obtained adsorption isotherm.

The average particle size of the spherical particle evaluated by a scanning electron microscope (SEM) and an electrophoresis light scattering apparatus showed a value of 2.1~2.9µm.

### Example 4: Preparation of Mesoporous Phenylene-Thiophene-Ethane-Silica Material by Using PEO-PLGA-PEO Block Copolymer

0.5g of EO₁₆(L₂₉G₇) EO₁₆ or EO₁₆ (L₂₃G₆) EO₁₆ triblock copolymer from among PEO-PLGA-PEO block copolymers was mixed with 21.85g of distilled water, 0.5g of ethanol, and 0.15g of 37wt% hydrochloric acid to thereby prepare an aqueous solution.

0.28g of 1,4-bis(triethoxysilyl)benzene (BTEB), 0.24g of 2,5-bis(triethoxysilyl)thiophene (BTET), and 0.35g of 1,2-bis(triethoxysilyl)ethane (BTEE) were added into the aqueous solution, and the mixture solution was magnetically stirred at a temperature of 40°C for 1 hour (sample name: BTE111). Meanwhile, 0.38g of 1,4-bis(triethoxysilyl)benzene (BTEB), 0.18g of 2,5-bis(triethoxysilyl)thiophene (BTET), and 0.26g of 1,2-bis(triethoxysilyl)ethane (BTEE) were added in the case of sample BTE211 in Table 1, and 0.19g of 1,4-bis(triethoxysilyl)benzene (BTEB), 0.37g of 2,5-bis(triethoxysilyl)thiophene (BTET), and 0.26g of 1,2-bis(triethoxysilyl)ethane (BTEE) were added in the case of sample BTE121 in Table 1.

A white precipitate obtained following the reaction was subjected to a settlement reaction in a 100°C water bath for 24 hours.

The resultant precipitate obtained through the settlement reaction was stirred at a temperature of 60°C in ethanol and acetone to thereby wash the precipitate, the washed precipitate was filtered using a suction flask to thereby remove the block copolymer, and then the filtered precipitate was dried to thereby obtain a mesoporous phenylene-thiophene-ethane-silica material in the form of a spherical particle.

As a result of a small angle X-ray scattering experiment for the obtained mesoporous phenylene-thiophene-ethane-silica material, the mesoporous phenylene-thiophene-ethane-silica material showed a two-dimensional hexagonal cylinder structure in which *d*-spacing is 94.0**Å**, and each of (100), (110) and (200) peaks exists at a crystal lattice position.

A nitrogen adsorption-desorption isotherm was obtained for the prepared mesoporous phenylene-thiophene-silica material, and a BET surface area of 918~1,016m²/g, a BJH (Barett-Joyner-Halenda) pore volume of 0.94~1.21cm³/g, and a pore size of 7.0~7.5nm were derived from the obtained adsorption isotherm.

The average particle size of the spherical particle evaluated by a scanning electron microscope (SEM) and an electrophoresis light scattering apparatus showed a value of about 2.0**µm**.

### Examples 5 to 7: Preparation of the Inventive Multifunctional Periodic Mesoporous Organosilica Materials by Using PEO-PPO-PEO Block Copolymer

Sample names of multifunctional periodic mesoporous organosilica materials to be prepared through Examples 5 to 7 and molar content ratios of organosilica precursors added as reactants to each sample are shown in Table 2.

**Table 2**

| | sample name | molar ratio of organosilica precursor | | |
|---|---|---|---|---|
| | | BTEB^{a)} | BTET^{b)} | BTEE^{c)} |
| Example 5 | P_BE21 | 2 | 0 | 1 |
| | P_BE11 | 1 | 0 | 1 |
| | P_BE12 | 1 | 0 | 2 |
| Example 6 | P_TE21 | 0 | 2 | 1 |
| | P_TE11 | 0 | 1 | 1 |
| | P_TE12 | 0 | 1 | 2 |
| Example 7 | P_BTE111 | 1 | 1 | 1 |
| | P_BTE211 | 2 | 1 | 1 |
| | P_BTE121 | 1 | 2 | 1 |
| | P_BTE112 | 1 | 1 | 2 |

| | | | | |
|---|---|---|---|---|
| a) BTEB: 1,4-bis(triethoxysilyl)benzene b) BTET: 2,5-bis(triethoxysilyl)thiophene c) BTEE: 1,2-bis(triethoxysilyl)ethane | | | | |

### Example 5: Preparation of Mesoporous Phenylene-Ethane-Silica Material by Using PEO-PPO-PEO Block Copolymer

0.66g of P123 (EO₂₀PO₇₀EO₂₀) triblock copolymer from among PEO-PPO-PEO block copolymers was mixed with 24g of distilled water and 0.13g of 37wt% hydrochloric acid to thereby prepare an aqueous solution.

0.34g of 1,4-bis(triethoxysilyl)benzene (BTEB) and 0.40g of 1,2-bis(triethoxysilyl)ethane (BTEE) were added into the aqueous solution, and the mixture solution was magnetically stirred at a temperature of 40°C for 1 hour (sample name: P_BE11). Meanwhile, 0.45g of 1,4-bis(triethoxysilyl)benzene (BTEB) and 0.27g of 1,2-bis(triethoxysilyl)ethane (BTEE) were added in the case of sample P_BE21 in Table 2, and 0.23g of 1,4-bis(triethoxysilyl)benzene (BTEB) and 0.53g of 1,2-bis(triethoxysilyl)ethane (BTEE) were added in the case of sample P_BE12 in Table 2.

A white precipitate obtained following the reaction was subjected to a settlement reaction in a 100°**C** water bath for 24 hours.

The resultant precipitate obtained through the settlement reaction was stirred at a temperature of 60°**C** in ethanol and acetone to thereby wash the precipitate, the washed precipitate was filtered using a suction flask to thereby remove the block copolymer, and then the filtered precipitate was dried to thereby obtain a mesoporous phenylene-ethane-silica material.

As a result of a small angle X-ray scattering experiment for the obtained mesoporous phenylene-ethane-silica material, the mesoporous phenylene-ethane-silica material showed a two-dimensional hexagonal cylinder structure in which *d*-spacing is 95.0~97.1**Å** , and each of (100), (110) and (200) peaks exists at a crystal lattice position.

A nitrogen adsorption-desorption isotherm was obtained for the prepared mesoporous phenylene-ethane-silica material, and a BET surface area of 670~810m²/g, a BJH (Barett-Joyner-Halenda) pore volume of 0.64~0.87cm³/g, and a pore size of 5.9~6.2nm were derived from the obtained adsorption isotherm.

### Example 6: Preparation of Mesoporous Thiophene-Ethane-Silica Material by Using PEO-PPO-PEO Block Copolymer

0.51g of P123 (EO₂₀PO₇₀EO₂₀) triblock copolymer from among PEO-PPO-PEO block copolymers was mixed with 19.2g of distilled water and 0.14g of 37wt% hydrochloric acid to thereby prepare an aqueous solution.

0.27g of 2,5-bis(triethoxysilyl)thiophene (BTET) and 0.32g of 1,2-bis(triethoxysilyl)ethane (BTEE) were added into the aqueous solution, and the mixture solution was magnetically stirred at a temperature of 40°**C** for 1 hour (sample name: P_TE11). Meanwhile, 0.35g of 2,5-bis(triethoxysilyl)thiophene (BTET) and 0.21g of 1,2-bis(triethoxysilyl)ethane (BTEE) were added in the case of sample P_TE21 in Table 2, and 0.18g of 2,5-bis(triethoxysilyl)thiophene (BTET) and 0.43g of 1,2-bis(triethoxysilyl)ethane (BTEE) were added in the case of sample P_TE12 in Table 2.

A white precipitate obtained following the reaction was subjected to a settlement reaction in a 100°**C** water bath for 24 hours.

The resultant precipitate obtained through the settlement reaction was stirred at a temperature of 60°**C** in ethanol and acetone to thereby wash the precipitate, the washed precipitate was filtered using a suction flask to thereby remove the block copolymer, and then the filtered precipitate was dried to thereby obtain a mesoporous thiophene-ethane-silica material in the form of a spherical particle.

As a result of a small angle X-ray scattering experiment for the obtained mesoporous thiophene-ethane-silica material, the mesoporous thiophene-ethane-silica material showed a two-dimensional hexagonal cylinder structure in which *d*-spacing is 96.1 to 99.2**Å** , and each of (100), (110) and (200) peaks exists at a crystal lattice position.

A nitrogen adsorption-desorption isotherm was obtained for the prepared mesoporous thiophene-ethane-silica material, and a BET surface area of 583~736m²/g, a BJH (Barett-Joyner-Halenda) pore volume of 0.61~0.80cm³/g, and a pore size of 6.3~6.4nm were derived from the obtained adsorption isotherm.

### Example 7: Preparation of Mesoporous Phenylene-Thiophene-Ethane-Silica Material by Using PEO-PPO-PEO Block Copolymer

0.66g of P123 (EO₂₀PO₇₀EO₂₀) triblock copolymer from among PEO-PLGA-PEO block copolymers was mixed with 24g of distilled water and 0.13g of 37wt% hydrochloric acid to thereby prepare an aqueous solution.

0.23g of 1,4-bis(triethoxysilyl)benzene (BTEB), 0.23g of 2,5-bis(triethoxysilyl)thiophene (BTET), and 0.27g of 1,2-bis(triethoxysilyl)ethane (BTEE) were added into the aqueous solution, and the mixture solution was magnetically stirred at a temperature of 40°**C** for 1 hour (sample name: P BTE111). Meanwhile, 0.35g of 1,4-bis(triethoxysilyl)benzene (BTEB), 0.18g of 2,5-bis(triethoxysilyl)thiophene (BTET), and 0.20g of 1,2-bis(triethoxysilyl)ethane (BTEE) were added in the case of sample P_BTE211 in Table 2, 0.18g of 1,4-bis(triethoxysilyl)benzene (BTEB), 0.35g of 2,5-bis(triethoxysilyl)thiophene (BTET), and 0.20g of 1,2-bis(triethoxysilyl)ethane (BTEE) were added in the case of sample P_BTE121 in Table 2, and 0.18g of 1,4-bis(triethoxysilyl)benzene (BTEB), 0.18g of 2,5-bis(triethoxysilyl)thiophene (BTET), and 0.40g of 1,2-bis(triethoxysilyl)ethane (BTEE) were added in the case of sample P_BTE112 in Table 2.

A white precipitate obtained following the reaction was subjected to a settlement reaction in a 100°**C** water bath for 24 hours.

The resultant precipitate obtained through the settlement reaction was stirred at a temperature of 60°**C** in ethanol and acetone to thereby wash the precipitate, the washed precipitate was filtered using a suction flask to thereby remove the block copolymer, and then the filtered precipitate was dried to thereby obtain a mesoporous phenylene-thiophene-ethane-silica material in the form of a spherical particle.

As a result of a small angle X-ray scattering experiment for the obtained mesoporous phenylene-thiophene-ethane-silica material, the mesoporous phenylene-thiophene-ethane-silica material showed a two-dimensional hexagonal cylinder structure in which *d*-spacing is 92.0~94.0**Å**, and each of (100), (110) and (200) peaks exists at a crystal lattice position.

A nitrogen adsorption-desorption isotherm was obtained for the prepared mesoporous phenylene-thiophene-silica material, and a BET surface area of 305~602m²/g, a BJH (Barett-Joyner-Halenda) pore volume of 0.30~0.62cm³/g, and a pore size of 5.8~6.2nm were derived from the obtained adsorption isotherm.

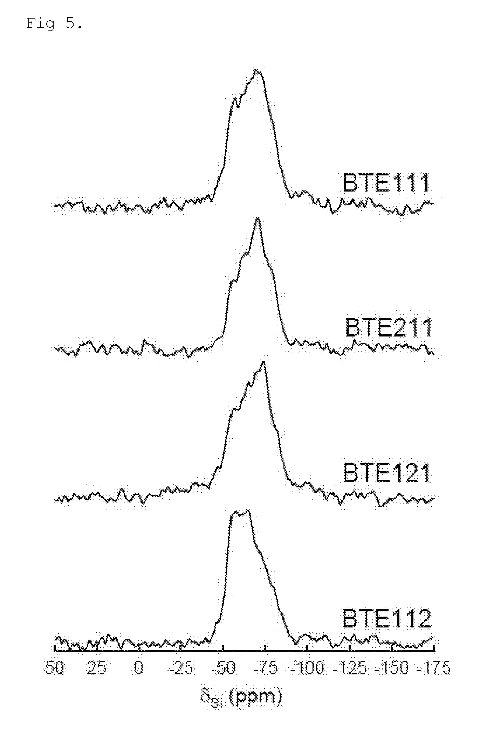

FIG. 5 illustrates a solid-phase silicon nuclear magnetic resonance spectrometry spectrum of a mesoporous phenylene-thiophene-silica material prepared in one Example of the present invention.

As shown in FIG. 5, a Q-peak did not appear, and silica bonds, mostly in the form of a T-bond, could be confirmed. Also, it could be confirmed that three organic components combined with silica form chemical bonds in an appropriate molar ratio corresponding to the reaction molar ratio.

As can be seen from the foregoing, the present invention can provide a multifunctional periodic mesoporous organosilica material that contains two or more organic components forming chemical bonds and located within the silica wall, has a surface area of 300~1,500m²/g, and includes an ordered hexagonal array of pores with a size of 5 to 10nm. Also, according to the present invention, the mesoporous organosilica material can be prepared in the form of a spherical particle with micrometer-sized average diameter and a rod according to its uses.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A method of preparing multifunctional periodic mesoporous organosilica materials in which two or more organic components form chemical bonds, and are located within a silica wall, the method comprising the steps of:
mixing a PEO-PLGA-PEO or a PEO-PPO-PEO block copolymer with distilled water, alcohol and acid to thereby prepare an aqueous solution (step 1);
mixing two or more kinds of organosilica precursors into the aqueous solution and subjecting the organosilica precursors to a reaction (step 2);
subjecting a product obtained in step 2 to a hydrothermal reaction (step 3); and
washing and filtering a product obtained in step 3 to thereby remove the block copolymer, and drying a final product (step 4) .

2. The method as claimed in claim 1, wherein the PEO-PLGA-PEO block copolymer has a number-average molecular weight of 3,500 to 7,000 Dalton, and includes PEO in an amount of 0.33 to 0.40% by weight, based on the total weight of the block copolymer.

3. The method as claimed in claim 1, wherein the PEO-PPO-PEO block copolymer has a number-average molecular weight of 3,000 to 15,000 Dalton, and includes PEO in an amount of 0.27 to 0.33% by weight, based on the total weight of the block copolymer.

4. The method as claimed in claim 3, wherein the PEO-PPO-PEO block copolymer comprises an EO₂₀PO₇₀EO₂₀ (where, EO is ethylene oxide, PO is propylene oxide, and subscripts represent the number of ethylene oxide units or propylene oxide units) block copolymer including PEO in an amount of 0.3% by weight, based on the total weight of the block copolymer.

5. The method as claimed in claim 1 or 2, wherein the aqueous solution prepared in step 1 comprises 2 to 2.5% by weight of PEO-PLGA-PEO block copolymer, 0.3 to 7.4% by weight of acid, 0 to 6.7% by weight of alcohol, and the balance water.

6. The method as claimed in any one of claims 1, 3 and 4, wherein the aqueous solution prepared in step 1 comprises 2.5 to 2.7% by weight of PEO-PPO-PEO block copolymer, 0.3 to 0.7% by weight of acid, and the balance water.

7. The method as claimed in any one of claims 1 to 4, wherein, in step 1, the alcohol comprises C₁₋₄ linear or branched-chain alcohol, and the acid comprises hydrochloric acid, sulfuric acid, nitric acid, or bromic acid.

8. The method as claimed in any one of claims 1 to 4, wherein the organosilica precursors comprise materials represented by the following Formula 1, and organosilica materials that are different in M are used in step 2:
[Formula 1] (RO)₃Si-M-Si(OR)₃
where, R is a C₁₋₅ alkyl group; O is oxygen; and M is a C₁₋₈ alkylene group, C₄ thiophene group, C₅₋₂₀ alkylthiophene group, C₅ phenylene group, C₆₋₂₁ alkylphenylene group, C₁₀₋₄₀ arylphenylene group, C₅₋₄₀ arylene group, C₅₋₄₀ alkylarylene group, or C₅₋₄₀ arylalkylene group.

9. The method as claimed in claim 8, wherein the organosilica precursors are selected from the group consisting of 1,2-bis(trimethoxysilyl)methane, 1,2-bis(triethoxysilyl)methane, 1,2-bis(trimethoxysilyl)ethane, 1,2-bis(triethoxysilyl)ethane, 1,4-bis(trimethoxysilyl)benzene, 1,4-bis(trimethoxysilylethyl)benzene, 1,4-bis(triethoxysilyl)benzene, 1,4-bis(triethoxysilylethyl)benzene, 2,5-bis(trimethoxysilyl)thiophene, 2,5-bis(triethoxysilyl)thiophene, 4,4'-bis(trimethoxysilyl)biphenyl, and 4,4'-bis(triethoxysilyl)biphenyl.

10. The method as claimed in any one of claims 1 to 4, wherein the total weight of the organosilica precursors used in step 2 is in the range from 1.3 to 2 times as much as the weight of polyethylene oxide (PEO) in the PEO-PLGA-PEO or PEO-PPO-PEO block copolymer, and the two or more organosilica precursors are mixed in the same molar ratio or any different molar ratio.

11. The method as claimed in any one of claims 1 to 4, wherein the reaction in step 2 is carried out by intensively stirring the solution at a temperature of 30 to 50°**C** for 0.5 to 2 hours.

12. The method as claimed in claim any one of claims 1 to 4, wherein the hydrothermal reaction in step 3 is carried out by settling the solution at a temperature of 80 to 100°**C** for 20 to 24 hours.

13. The method as claimed in any one of claims 1 to 4, wherein the washing in step 4 is carried out by leaving solid precipitate in 100 to 120ml of ethanol per g of the precipitate for 2 hours, separating the ethanol, and then stirring the precipitate in 100 to 120ml of acetone at a temperature of 60°**C** for 5 to 10 hours.

14. A multifunctional periodic mesoporous organosilica material prepared by the method as claimed in any one of claims 1 to 4, which contains two or more organic components forming covalent bonds and located within a silica wall, and has ordered hexagonal array of pores with a size of 5 to 10nm.

15. The multifunctional periodic mesoporous organosilica material as claimed in claim 14, which has an outer form of a spherical particle with an average diameter of 0.5 to 10**µm** or a rod.

16. The multifunctional periodic mesoporous organosilica material as claimed in claim 14, which is in the form of phenylene-ethane-silica, thiophene-ethane-silica, phenylene-thiophene-silica, or phenylene-thiophene-ethane-silica.

17. The multifunctional periodic mesoporous organosilica material as claimed in claim 16, wherein the organic components constituting the multifunctional periodic mesoporous organosilica material are contained in any composition ratio.
